# EUROPEAN PATENT SPECIFICATION

(11) **EP 3 107 075 B1**
(45) Date of publication and mention of the grant of the patent: **15.04.2020**
(21) Application number: 16174084.0
(22) Date of filing: 13.06.2016
(51) Int. Cl.: G07C 9/00, H01Q 1/32, H01Q 7/00, H02M 7/5387, H04B 1/04

(54) **VEHICLE COMMUNICATION APPARATUS**
FAHRZEUGKOMMUNIKATIONSVORRICHTUNG
APPAREIL DE COMMUNICATION DE VÉHICULE

(30) Priority: 19.06.2015 JP 2015123575
(43) Date of publication of application: 21.12.2016
(73) Proprietor: AISIN SEIKI KABUSHIKI KAISHA, Kariya-shi, Aichi-ken, 448-8650 (JP)
(72) Inventor: TABATA, Takehiro, KARIYA-SHI, AICHI-KEN, 448-8650 (JP)
(74) Representative: Cabinet Beau de Loménie

(56) References cited:
- EP-A2- 2 685 435
- JP-A- 2009 084 829

## Description

### TECHNICAL FIELD

The disclosure relates to a vehicle communication apparatus.

### BACKGROUND DISCUSSION

Japanese Patent No. 5589870 (Reference 1) and JP2014-17701A (Reference 2) disclose various vehicle door handle driving devices. The vehicle door handle driving device (ECU or driving ECU) uses two electric wires (connection wires) to be connected to a door handle (vehicle-mounted device or module) including a detection member (person detection IC or sensor IC) and an antenna, and these two electric wires are used for the power supply (driving) of the antenna, for the power supply of the detection member, and for the outputting of the detection signal. Particularly, in order to prevent the power supply to the detection member from being blocked for a period during which the antenna is driven, it has been suggested that a resonance voltage of the antenna is used.

However, in References 1 and 2, the resonance voltage of the antenna is used to supply the power to the detection member, and thus, it is necessary to set the resonance voltage to be equal to or less than a rated voltage of the detection member. Accordingly, it is necessary to increase the size of the antenna as the Q factor of the antenna may not be increased. It is also known from EP2685435 a vehicle door handle driving device.

### SUMMARY

Thus, a need exists for a vehicle communication apparatus capable of further reducing the size of an antenna. The present invention is defined in the appended claims 1 to 3.

The vehicle communication apparatus according to an aspect of this disclosure comprises a vehicle door driving device that is electrically connected to an antenna and a DC driving detection member for detecting approach or touch of a person, which are mounted on a door handle and are connected in parallel, through a first connection wire and a second connection wire. The first connection wire is constantly connected to a first positive DC power supply, and the second connection wire is connected to a ground for a period during which the antenna is not driven. The vehicle door handle driving device includes: a booster capacitor whose first terminal is connected to the first DC power supply; and an inverter that is connected to the second terminal of the booster capacitor, is connected to a second positive DC power supply and the ground, is configured to generate an AC voltage having a resonance frequency of the antenna, and output the generated AC voltage to the first connection wire and the second connection wire through the booster capacitor.

According to this configuration, the first connection wire is constantly connected to the first DC power supply. Accordingly, for example, for a period during which the inverter is not driven (that is, for a period during which the antenna is not driven), a DC voltage of the first DC power supply is supplied to the detection member through the first and second connection wires by connecting the second connection wire to the ground. Meanwhile, for a period during which the inverter is driven (that is, for a period during which the antenna is driven), an AC voltage having a resonance frequency of the antenna is output to the first connection wire and the second connection wire through the booster capacitor. Accordingly, a voltage obtained by raising a DC component of the AC voltage having the resonance frequency of the antenna by a DC voltage of the first DC power supply is supplied to the detection member through the first and second connection wires. As stated above, the power is supplied to the detection member irrespective of whether or not the antenna is driven. In this case, the power can be supplied to the detection member without using the resonance voltage especially for a period during which the antenna is driven, and thus, the resonance voltage can be set without being restricted to a rated voltage of the detection member. Thus, it is possible to further reduce the size of the antenna as the Q factor of the antenna increases.

In the vehicle communication apparatus according to the aspect of this disclosure, it is preferable that the first terminal of the booster capacitor is connected to the first DC power supply through a cathode of a diode whose anode is connected to the first DC power supply.

According to this configuration, for a period during which the inverter is driven (that is, for a period during which the antenna is driven), even through the AC voltage having the resonance frequency of the antenna becomes the voltage obtained by raising the DC component by the DC voltage of the first DC power supply, the first terminal of the booster capacitor can suppress the backflow of the current toward the first DC power supply by the diode.

In the vehicle communication apparatus according to the aspect of this disclosure, it is preferable that a period during which the antenna is driven is divided into an oscillation period during which the AC voltage is generated and a non-oscillation period during which the AC voltage is not generated, and the second connection wire is connected to the ground during the non-oscillation period of the antenna.

According to this configuration, even for a period during which the antenna is driven but does not oscillate, the DC voltage of the first DC power supply can be supplied to the detection member through the first and second connection wires by connecting the second connection wire to the ground.

According to the configuration of the vehicle communication apparatus, the antenna driving detection terminal is connected to the first connection wire (power terminal) through the DC cut capacitor, and is connected to the second connection wire (ground terminal) through the passive element. Accordingly, for example, for a period during which the inverter is not driven (that is, for a period during which the antenna is not driven), the voltage supplied to the antenna driving detection terminal becomes zero. Therefore, if the detection signal is output in this state, the detection signal is output to the first connection wire in a state in which the detection signal is blocked from flowing to the ground by the DC cut capacitor. The lock and unlock controller of the vehicle door handle driving device can appropriately issue the lock or unlock command of the vehicle door based on the detection signal. Meanwhile, for a period during which the inverter is driven (that is, for a period during which the antenna is driven), the AC voltage having the resonance frequency of the antenna is output to the first connection wire and the second connection wire through the booster capacitor. Accordingly, the AC current flows to the DC cut capacitor and the passive element, and thus, as much of the voltage as the voltage drop in the passive element is supplied to the antenna driving detection terminal. Thus, the antenna driving detection unit can appropriately detect the driving state of the antenna. In this case, the driving state of the antenna can be detected without using the resonance voltage especially for a period during which the antenna is driven, and thus, the resonance voltage can be set without being restricted to the rated voltage of the antenna driving detection unit (detection member). Thus, it is possible to further reduce the size of the antenna as the Q factor of the antenna increases.

According to the aspects of this disclosure, an effect of further reducing the size of the antenna is exhibited.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view showing an outside door handle;
Fig. 2 is a circuit block diagram showing an electrical configuration of a vehicle door handle driving device and a vehicle communication apparatus according to a first embodiment;
Figs. 3A to 3E are time charts showing the ON or OFF states of first to fifth switches of the vehicle door handle driving device and the vehicle communication apparatus according to the present embodiment;
Fig. 4 is a circuit block diagram showing an electrical configuration of a vehicle door handle driving device and a vehicle communication apparatus according to a second embodiment;
Fig. 5 is a circuit block diagram showing an electrical configuration of a vehicle door handle driving device and a vehicle communication apparatus according to a third embodiment;
Figs. 6A to 6F are time charts showing the ON or OFF states of first to sixth switches of the vehicle door handle driving device and the vehicle communication apparatus according to the present embodiment; and
Figs. 7A to 7F are time charts showing another ON or OFF states of first to sixth switches of the vehicle door handle driving device and the vehicle communication apparatus according to the present embodiment.

### DETAILED DESCRIPTION

### First Example

Hereinafter, a vehicle door handle driving device and a vehicle communication apparatus according to a first example will be described. The present example is a smart entry (registered trademark) system that locks and unlocks a vehicle door through wireless communication with a portable device carried by a user of a vehicle.

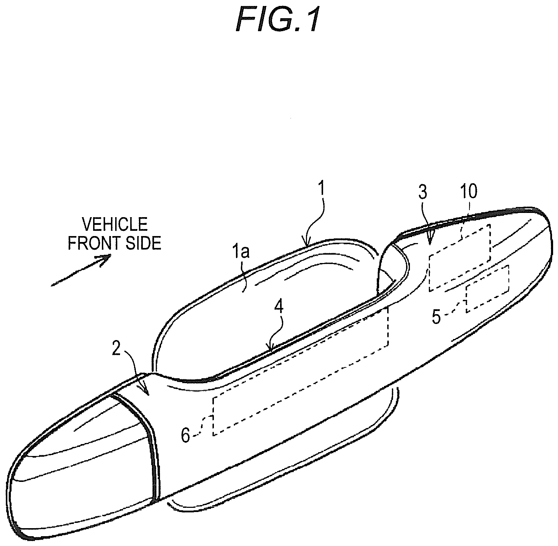

As shown in Fig. 1, an outside door handle 2 is provided at a door outer panel 1 constituting the vehicle door. The outside door handle 2 extends in forward and backward directions of the vehicle, and is attached to the door outer panel 1 at two front and rear portions thereof. A recess 1a is inwardly formed in the door outer panel 1 so as to face the outside door handle 2. Thus, it is possible to allow a person to easily hold a substantially central portion of the outside door handle 2 with their hand.

The outside door handle 2 is formed by molding, for example, a resin material into a hollow shape having an inner space. Detection areas capable of detecting approach or touch of the person are formed on an outer wall surface of the outside door handle 2. That is, a lock detection area 3 capable of detecting approach or touch of the hand of the person who intends to lock the vehicle door is formed on an outer wall surface of a front side of the outside door handle 2. An unlock detection area 4 capable of detecting approach or touch of the hand of the person who intends to unlock the vehicle door is formed on an outer wall surface of an intermediate portion as a holding portion of the outside door handle 2. Within the outside door handle 2, a lock sensor electrode 5 which is made of, for example, a metal plate and has a substantially strip shape is accommodated close to a surface separated from the door outer panel 1 so as to correspond to the lock detection area 3 and an unlock sensor electrode 6 which is made of, for example, a metal plate and has a substantially strip shape is accommodated close to the door outer panel 1 so as to correspond to the unlock detection area 4. The unlock sensor electrode 6 is formed so as to be greater than the lock sensor electrode 5.

Within the outside door handle 2, a module 10 which is electrically connected to the lock sensor electrode 5 and the unlock sensor electrode 6 is accommodated.

Hereinafter, an electrical configuration of the present example will be described.

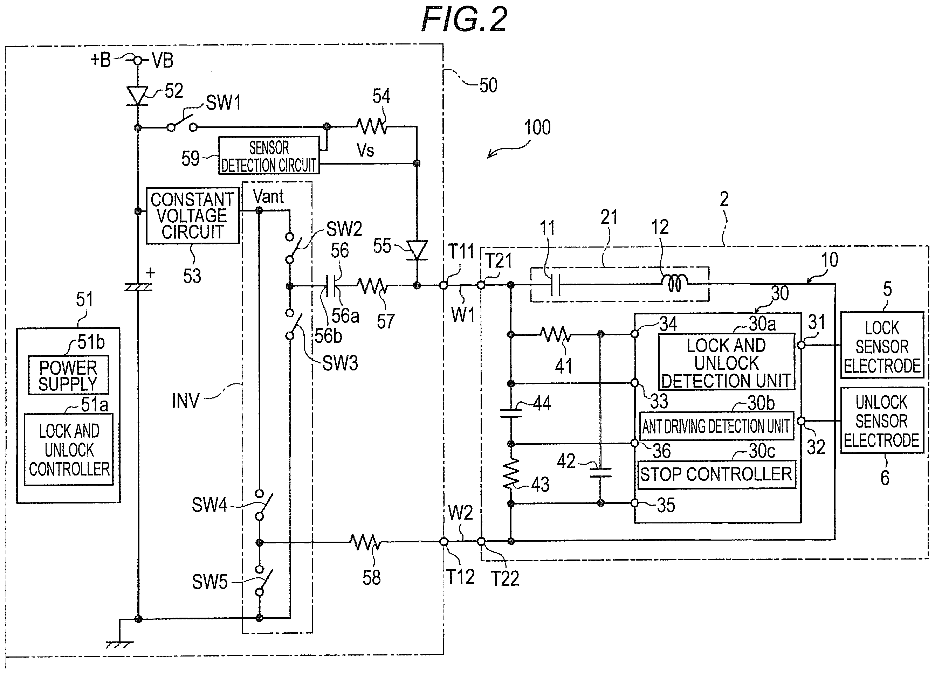

As shown in Fig. 2, a driving ECU 50 as the vehicle door handle driving device is connected to one end of a first electric wire W1 as a first connection wire at a first controller-side terminal T11, and the other end of the first electric wire W1 is connected to a first module-side terminal T21 of the module 10. The driving ECU 50 is connected to one end of a second electric wire W2 as a second connection wire at a second controller-side terminal T12, and the other end of the second electric wire W2 is connected to a second module-side terminal T22 of the module 10. That is, the driving ECU 50 and the module 10 are connected through two wires of the first and second electric wires W1 and W2. The driving ECU 50 and the module 10 together with the first and second electric wires W1 and W2 constitute the vehicle communication apparatus 100.

The driving ECU 50 includes a controller 51 which includes, for example, a microcomputer as a main member. The controller 51 includes a lock and unlock controller 51a, and a power supply 51b. The driving ECU 50 includes a diode 52 whose anode is connected to a battery +B as a first DC power supply, and a first switch SW1 which is connected to a cathode of the diode 52. The driving ECU 50 includes a constant voltage circuit 53 as a second DC power supply whose one end is similarly connected to the cathode of the diode 52. The constant voltage circuit 53 generates an antenna driving voltage Vant (≤ VB) whose voltage fluctuation is controlled based on a battery voltage VB supplied from the battery +B. The driving ECU 50 includes a second switch SW2 and a third switch SW3 connected to the other end of the constant voltage circuit 53 in series, and a fourth switch SW4 and a fifth switch SW5 connected to the other end of the constant voltage circuit 53 in series so as to be connected to the second and third switches in parallel. The third switch SW3 and the fifth switch SW5 are grounded.

The driving ECU 50 includes a sensor detection resistor 54 whose one end is connected to the first switch SW1. The other end of the sensor detection resistor 54 is connected to an anode of a backflow prevention diode 55 as a diode, and a cathode of the backflow prevention diode 55 is connected to the first controller-side terminal T11 (first electric wire W1). The driving ECU 50 includes a booster capacitor 56 whose first terminal 56a is connected to the cathode of the backflow prevention diode 55 through a resistor 57. The second terminal 56b of the booster capacitor 56 is connected to a connected portion of the second switch SW2 and the third switch SW3. A sensor detection circuit 59 is connected between both terminals of the sensor detection resistor 54. The sensor detection circuit 59 obtains a voltage Vs between both the terminals of the sensor detection resistor 54. A connected portion of the fourth switch SW4 and the fifth switch SW5 is connected to the second controller-side terminal T12 (second electric wire W2) through a resistor 58.

Here, the lock and unlock controller 51a of the controller 51 monitors the voltage Vs obtained in the sensor detection circuit 59. Meanwhile, the power supply 51b operates to switch the first to fifth switches SW1 to SW5. Specifically, the power supply 51b basically sets the first switch SW1 to be constantly in an ON state. Thus, the first controller-side terminal T11 (first electric wire W1) is constantly connected to the battery +B through the backflow prevention diode 55 and the sensor detection resistor 54. The power supply 51b generates a square wave voltage VP having an amplitude double that of the antenna driving voltage Vant as an AC voltage by alternately switching between the ON and OFF states of the second and fifth switches SW2 and SW5 and the ON and OFF states of the third and fourth switches SW3 and SW4 (by allowing the polarities of the switches to be opposite to one another). The square wave voltage VP is output to the first controller-side terminal T11 (first electric wire W1) through the booster capacitor 56 and the resistor 57 and is output to the second controller-side terminal T12 (second electric wire W2) through the resistor 58. The second to fifth switches SW2 to SW5 constitute an inverter INV realized using a so-called H bridge circuit. For a period during which the square wave voltage VP is not generated, the power supply 51b sets the second to fourth switches SW2 to SW4 to be in the OFF state, and sets the fifth switch SW5 to be in the ON state. In this case, the second controller-side terminal T12 (second electric wire W2) is grounded.

In the module 10, an antenna resonance capacitor 11 whose one end is connected to the first module-side terminal T21 is provided, and an antenna coil 12 whose one end is connected to the other end of the antenna resonance capacitor 11 is provided. The other end of the antenna coil 12 is connected to the second module-side terminal T22. The antenna resonance capacitor 11 and the antenna coil 12 constitute an LF antenna 21 as an antenna, and constitute an LC serial resonance circuit having a resonance frequency f1. Accordingly, if an AC voltage (square wave voltage) having a frequency matching the resonance frequency f1 is supplied from the driving ECU 50 through the first and second electric wires W1 and W2, the antenna coil 12 is driven, and a radio signal is output from the antenna coil 12. The radio signal is, for example, an inquiry signal (request signal) of the portable device carried by the user of the vehicle, and the portable device that has received the inquiry signal transmits a signal having a unique ID code.

A sensor IC 30 as a detection member is provided in the module 10. The sensor IC 30 is connected to the lock sensor electrode 5 and the unlock sensor electrode 6 at a lock detection input terminal 31 and an unlock detection input terminal 32, respectively, and is connected to the first module-side terminal T21 at a detection signal output terminal 33.

The sensor IC 30 includes a lock and unlock detection unit 30a constituting a known electrostatic sensor together with the lock sensor electrode 5 or the unlock sensor electrode 6, and supplies power to the lock sensor electrode 5 and the unlock sensor electrode 6 through the lock detection input terminal 31 and the unlock detection input terminal 32 by means of the lock and unlock detection unit 30a. The lock and unlock detection unit 30a detects that the hand of the person approaches or touches the lock detection area 3 or the unlock detection area 4 by respectively detecting electrostatic capacitance changes between the lock sensor electrode 5 and the door outer panel 1 and between the unlock sensor electrode 6 and the door outer panel. The lock and unlock detection unit 30a outputs a lock detection signal as a negative detection signal indicating whether or not the detection is performed to the first module-side terminal T21 (first electric wire W1) from the detection signal output terminal 33. Specifically, the lock and unlock detection signal 30a includes a known switching member, and generates and outputs, for example, a lock detection signal and an unlock detection signal by causing voltage drop in the supply voltage of the driving ECU 50 with different cycles.

If the lock detection signal or the unlock detection signal is output to the first controller-side terminal T11 through the first electric wire W1, as much current flows to the sensor detection resistor 54 as the voltage drop, and thus, the voltage drop is obtained in the sensor detection circuit 59, as the voltage Vs between both the terminals of the sensor detection resistor 54. The lock and unlock controller 51a detects the lock detection signal or the unlock detection signal based on the monitored voltage Vs. The lock and unlock controller 51a issues a lock command of the vehicle door through the detection of the lock detection signal and issues an unlock command of the vehicle door through the detection of the unlock detection signal.

The sensor IC 30 is connected to one end of the resistor 41 at a power terminal 34, and the other end of the resistor 41 is connected to the first module-side terminal T21. The sensor IC 30 is connected to the second module-side terminal T22 at a ground terminal 35. A smoothing capacitor 42 is connected between the power terminal 34 and the ground terminal 35.

Accordingly, for example, for a period during which the square wave voltage VP is not generated (for a period during which the inverter INV is not driven), the power terminal 34 is connected to the battery +B through the first electric wire W1 and the ground terminal 35 is grounded through the second electric wire W2, so that the sensor IC 30 is driven by the battery voltage VB supplied from the driving ECU 50. Meanwhile, for a period during which the square wave voltage VP is generated (for a period during which the inverter INV is driven), in the sensor IC 30, the power terminal 34 is connected to the battery +B through the first electric wire W1 and is connected to the inverter INV through the first electric wire W1 and the booster capacitor 56 and the ground terminal 35 is connected to the inverter INV through the second electric wire W2. Thus, the sensor IC 30 is driven by a voltage from the driving ECU 50 obtained by raising a DC component of the square wave voltage VP by the battery +B.

That is, the LF antenna 21 and the sensor IC 30 are electrically connected to the inverter INV (driving ECU 50) in a state in which these members are connected in parallel. The booster capacitor 56 serves to raise a DC component for a period during which the LF antenna 21 is driven by storing power for a period during which the sensor IC 30 is driven. The capacitance of the booster capacitor 56 is set to be (for example, about a hundred times or more) greater than the capacitance of the antenna resonance capacitor 11, and thus, boosting to a specified voltage is realized.

The sensor IC 30 is connected to one end of the resistor 43 as a passive element at an antenna driving detection terminal 36, and the other end of the resistor 43 is connected to the ground terminal 35. In the sensor IC 30, a DC cut capacitor 44 is connected between the detection signal output terminal 33 and the antenna driving detection terminal 36. Accordingly, for a period during which the square wave voltage VP matching the resonance frequency f1 is supplied from the driving ECU 50 through the first and second electric wires W1 and W2 (that is, for a period during which the LF antenna 21 is driven), a DC component is removed in the DC cut capacitor 44, and a voltage divided by the DC cut capacitor 44 and the resistor 43 is supplied to the antenna driving detection terminal 36.

The sensor IC 30 includes an antenna driving detection unit 30b, and detects the voltage divided by the DC cut capacitor 44 and the resistor 43 by means of the antenna driving detection unit 30b. The antenna driving detection unit 30b determines whether or not the LF antenna 21 is driving based on a level (root mean square value) of the voltage divided by the DC cut capacitor 44 and the resistor 43. Specifically, the antenna driving detection unit 30b includes, for example, a comparator, and determines that the LF antenna 21 is driving in a case where the level of the voltage exceeds a preset threshold.

The sensor IC 30 includes a stop controller 30c, and obtains the determination result in the antenna driving detection unit 30b by means of the stop controller 30c. In a case where it is determined that the LF antenna 21 is driving, the stop controller 30c stops the function of the sensor IC 30. Specifically, the stop controller 30c transmits a stop command to the lock and unlock detection unit 30a, and stops outputting the detection signal from the detection signal output terminal 33. Alternatively, the stop controller 30c may stop supplying the power to the lock sensor electrode 5 and the unlock sensor electrode 6 by the lock and unlock detection unit 30a. Alternatively, the stop controller 30c may stop the entire function of the lock and unlock detection unit 30a.

In a case where it is determined that the LF antenna 21 is not driven by the antenna driving detection unit 30b, the stop controller 30c releases the function stoppage of the sensor IC 30 (resumes the function of the sensor IC 30).

Hereinafter, an aspect in which the power is supplied to the module 10 by the power supply 51b (driving ECU 50) will be described.

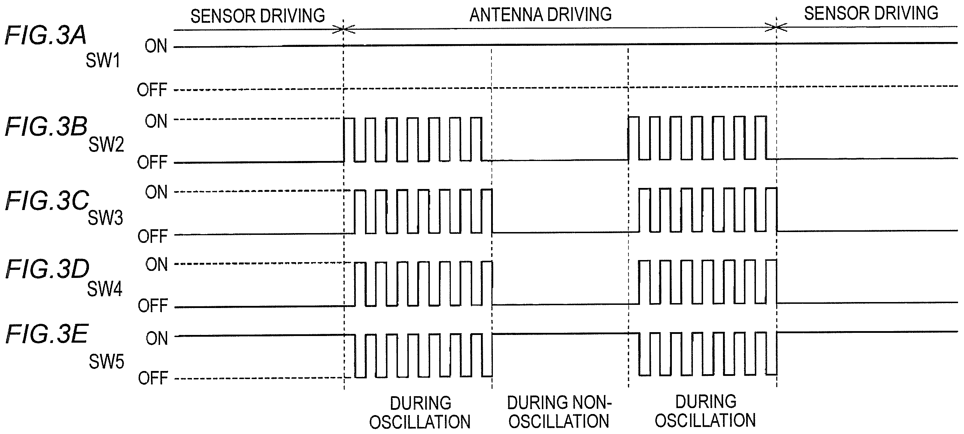

As shown in Fig. 3A, the power supply 51b sets the first switch SW1 to be constantly in the ON state as described above. That is, the first controller-side terminal T11 (first electric wire W1) is constantly connected to the battery +B through the backflow prevention diode 55 and the sensor detection resistor 54.

As shown in Figs. 3B to 3E, for a period during which the sensor IC 30 is driven (for a period during which the square wave voltage VP is not generated), the power supply 51b sets the second to fourth switches SW2 to SW4 to be in the OFF state, and sets the fifth switch SW5 to be in the ON state. Accordingly, the second controller-side terminal T12 (second electric wire W2) is grounded. Accordingly, the power terminal 34 is connected to the battery +B through the resistor 41 and the first module-side terminal T21 (first electric wire W1) and the ground terminal 35 is grounded through the second module-side terminal T22 (second electric wire W2), so that the battery voltage VB of the battery +B is supplied to the sensor IC 30 through the first and second electric wires W1 and W2.

Meanwhile, for a period during which the LF antenna 21 is driven, the LF antenna is switched between an oscillation period and a non-oscillation period at a frequency which is sufficiently smaller than the resonance frequency f1. For a period during which the LF antenna oscillates (for a period during which the square wave voltage VP is generated), the power supply 51b generates a square wave voltage VP having a resonance frequency f1 having an amplitude double that of the antenna driving voltage Vant by alternately switching the ON and OFF states of the second and fifth switches SW2 and SW5 and the ON and OFF states of the third and fourth switches SW3 and the SW4 with the resonance frequency f1.

Here, the connected portion of the second and third switches SW2 and SW3 is connected to the first controller-side terminal T11 (first electric wire W1) through the booster capacitor 56, and thus, the LF antenna 21 is driven by a voltage obtained by raising a DC component of the square wave voltage VP by the battery +B. In addition, for a period during which the LF antenna 21 oscillates, the sensor IC 30 is driven by a voltage obtained by raising the DC component of the square wave voltage VP by the battery +B and smoothing the voltage whose DC component is raised in the capacitor 42.

Meanwhile, for a period during which the LF antenna does not oscillate (for a period during which the square wave voltage VP is not generated), the power supply 51b sets the second to fourth switches SW2 to SW4 to be in the OFF state, and sets the fifth switch SW5 to be in the ON state. Accordingly, the power terminal 34 is connected to the battery +B through the resistor 41 and the first module-side terminal T21 (first electric wire W1) and the ground terminal 35 is grounded through the second module-side terminal T22 (second electric wire W2), so that the battery voltage VB of the battery +B is supplied to the sensor IC 30 through the first and second electric wires W1 and W2.

The oscillation period and non-oscillation period of the LF antenna 21 correspond to an ON period and an OFF period of information signal (logics "1" and "0"), and the above-described inquiry signal is generated and transmitted by combinations thereof.

As stated above, according to the present example, the following effects are obtained.
(1) In the present example, the first electric wire W1 is constantly connected to the battery +B. Accordingly, for example for a period during which the inverter INV is not driven (that is, for a period during which the LF antenna 21 is not driven), the second electric wire W2 is grounded (is connected to a ground), and thus, the battery voltage VB (DC voltage) of the battery +B is supplied to the sensor IC 30 through the first and second electric wires W1 and W2. Meanwhile, for a period during which the inverter INV is driven (that is, for a period during which the LF antenna 21 is driven), the square wave voltage VP having the resonance frequency f1 of the LF antenna 21 is output to the first electric wire W1 and the second electric wire W2 through the booster capacitor 56. Accordingly, the voltage obtained by raising the DC component of the square wave voltage VP having the resonance frequency f1 of the LF antenna 21 by the battery voltage VB of the battery +B is supplied to the sensor IC 30 through the first and second electric wires W1 and W2.
   As mentioned above, the power is supplied to the sensor IC 30 irrespective of whether or not the LF antenna 21 is driven. In this case, the power can be supplied to the sensor IC 30 without using the resonance voltage especially for a period during which the LF antenna 21 is driven, and thus, the resonance voltage can be set without being restricted to a rated voltage of the sensor IC 30. Thus, the size of the LF antenna 21 can be further reduced as the Q factor of the LF antenna 21 increases.
   It is possible to further improve mountability thereof as the size of the LF antenna 21 is reduced. Alternatively, since it is not necessary to increase the size of the LF antenna 21, adopt the sensor IC 30 having a high rated voltage, or separately provide a circuit element (for example, a diode having a high breakdown voltage) for supplying power at the resonance voltage, it is possible to achieve low cost.
   The resonance voltage can be increased without being restricted to the rated voltage of the sensor IC 30, and thus, it is possible to increase the output of the LF antenna 21.
(2) In the present example, it is assumed that for a period during which the inverter INV is driven (that is, for a period during which the LF antenna 21 is driven), the first terminal 56a of the booster capacitor 56 becomes the voltage obtained by raising the DC component of the square wave voltage VP having the resonance frequency f1 of the LF antenna 21 by the battery voltage VB of the battery +B. Even in this case, it is possible to suppress the backflow of current toward the battery +B by the backflow prevention diode 55.
(3) In the present example, for a period during which the LF antenna 21 is driven but does not oscillate, the power supply 51b (driving ECU 50) sets the fifth switch SW5 to be in the ON state, and grounds the second electric wire W2 (connects the second electric wire to the ground). Accordingly, even for a period during which the LF antenna 21 is driven, if the LF antenna does not oscillate, it is possible to supply the battery voltage VB (DC voltage) of the battery +B to the sensor IC 30 through the first and second electric wires W1 and W2. Thus, for example, in a case where the sensor IC 30 has a function of changing into a so-called sleep state in which the sensor IC waits in a power saving state by temporarily stopping the operation thereof at the time of power shortage, it is possible to prevent the changing into the sleep state.
(4) In the present example, the antenna driving detection terminal 36 is connected to the first electric wire W1 (power terminal 34) through the DC cut capacitor 44, and is connected to the second electric wire W2 (ground terminal 35) through the resistor 43. Accordingly, for example, for a period during which the inverter INV is not driven (that is, the LF antenna 21 is not driven), the voltage supplied to the antenna driving detection terminal 36 becomes zero. Therefore, if the lock detection signal or the unlock detection signal (detection signal) is output from the detection signal output terminal 33, the detection signal is output to the first electric wire W1 in a state in which the detection signal is blocked from flowing to the ground by the DC cut capacitor 44. The lock and unlock controller 51a (driving ECU 50) can appropriately issue a lock or unlock command of the vehicle door based on the lock or unlock detection signal.
   Meanwhile, for a period during which the inverter INV is driven (that is, for a period during which the LF antenna 21 is driven), the square wave voltage VP having the resonance frequency f1 of the LF antenna 21 is output to the first electric wire W1 and the second electric wire W2 through the booster capacitor 56. Accordingly, AC current flows to the DC cut capacitor 44 and the resistor 43, and thus, as much of the voltage as the voltage drop in the resistor 43 is supplied to the antenna driving detection terminal 36. Therefore, the antenna driving detection unit 30b can appropriately detect a driving state of the LF antenna 21. In this case, particularly, the resonance voltage can be set without being restricted to the rated voltage of the antenna driving detection unit 30b (sensor IC 30) by detecting the driving state of the LF antenna 21 without using the resonance voltage especially for a period during which the LF antenna 21 is driven. Thus, the size of the LF antenna 21 can be further reduced as the Q factor of the LF antenna 21 increases.
   It is possible to further improve mountability thereof as the size of the LF antenna 21 is reduced. Alternatively, since it is not necessary to increase the size of the LF antenna 21, adopt the antenna driving detection unit 30b (sensor IC 30) having a high rated voltage, or separately provide a circuit element (for example, a diode having a high breakdown voltage) for using the resonance voltage, it is possible to achieve low cost.
   The resonance voltage can be increased without being restricted to the rated voltage of the sensor IC 30, and thus, it is possible to increase the output of the LF antenna 21.
(5) In the present example, even for a period during which the LF antenna 21 is driven, the power can be supplied to the sensor IC 30 through a passage which is constantly connected to the battery +B, and thus, it is possible to simplify the circuit configuration of the module 10 (outside door handle 2) and it is possible to achieve low cost. Even for a period during which the LF antenna 21 is driven, the power can be supplied to the sensor IC 30. Accordingly, for example, it is not necessary to increase the capacitance of the smoothing capacitor 42 for securing the power, and thus, it is possible to achieve the circuit configuration of the module 10 (outside door handle 2) at lower cost.
(6) In the present example, even for a period during which the LF antenna 21 is driven, since it is possible to prevent a negative voltage from being applied to the sensor IC 30 (power terminal 34), a protection element such as a negative-voltage prevention diode may not be provide between the first module-side terminal T21 and the power terminal 34. Thus, it is possible to achieve the circuit configuration of the module 10 (outside door handle 2) at lower cost.
(7) In the present example, the sensor detection resistor 54 is provided at the passage (between the diode 52 and the first controller-side terminal T11) connected to the battery +B of the driving ECU 50, and thus, it is possible to obtain the detection signal (the lock detection signal or the unlock detection signal) by the sensor detection circuit 59 by using the passage.
(8) In the present example, by driving the LF antenna 21 and the sensor IC 30 by using two common wires of the first and second electric wires W1 and W2, it is possible to further simplify the circuit configuration of the entire device, and it is possible to achieve low cost. Alternatively, the passage for supplying the power to the sensor IC 30 for a period during which the LF antenna 21 is driven and the passage for supplying the power for a period during which the sensor IC 30 is driven are used in common, and thus, it is possible to further simplify the circuit configuration of the module 10 (outside door handle 2) and it is possible to achieve low cost.
(9) In the present example, the square wave voltage VP is generated from the antenna driving voltage Vant which is generated in the constant voltage circuit 53 and is further stabilized, and thus, it is possible to stabilize the output, that is, the communication range of the LF antenna 21, that is, a communication range. Since it is not necessary to operate the constant voltage circuit 53 except for the period during which the LF antenna 21 is driven, the occurrence of dark current is suppressed, and thus, it is possible to suppress power consumption of the battery +B.
(10) In the present example, the fifth switch SW5 involved in supplying the power to the LF antenna 21 is also used as a switch involved in supplying the power to the sensor IC 30 (connecting to the ground), and thus, it is possible to further simplify the circuit configuration of the driving ECU 50 and it is possible to achieve low cost.

### Second Example

Hereinafter, a vehicle door handle driving device and a vehicle communication apparatus according to a second example will be described. Since the second example is mainly different from the first example in that an inverter realized using a so-called half bridge circuit is adopted, the detailed description of the same components will be omitted.

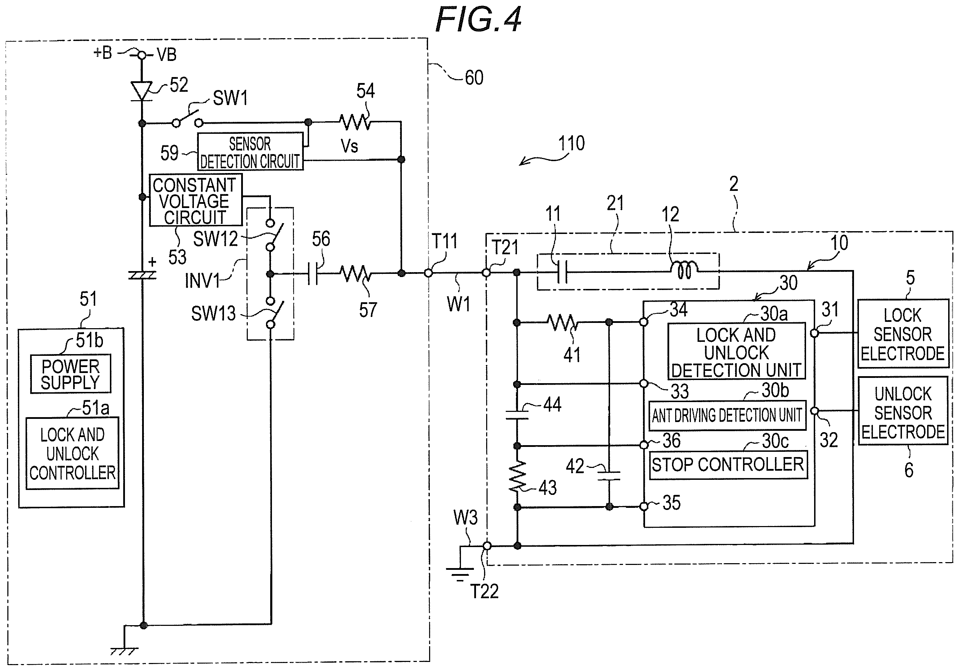

As shown in Fig. 4, in a driving ECU 60 of the present example, the backflow prevention diode 55 is omitted, and the other end of the sensor detection resistor 54 is connected to the first controller-side terminal T11 (first electric wire W1). The driving ECU 60 includes a second switch SW12 and a third switch SW13 connected to the other end of the constant voltage circuit 53 in series. The third switch SW13 is grounded. The power supply 51b generates a square wave voltage VP1 having an amplitude of the antenna driving voltage Vant by alternatively switching between the ON and OFF state of the second switch SW12 and the ON and OFF state of the third switch SW13 (by allowing the polarities of the switches to be opposite to each another) (corresponding to Figs. 3B and 3C). The second and third switches SW12 and SW13 constitute an inverter INV1 realized using the so-called half bridge circuit.

In the present example, the second module-side terminal T22 of the module 10 is grounded through the electric wire W3 in place of the second electric wire W2 (for example, housing grounding through a vehicle body). In this case, the second connection wire that electrically connects the module 10 and the driving ECU 60 is formed by the vehicle body as the housing. The vehicle body (second connection wire) together with the driving ECU 60, the module 10 and the first electric wire W1 constitutes a vehicle communication apparatus 110.

Accordingly, the square wave voltage VP1 generated in the inverter INV1 is output to the first controller-side terminal T11 (first electric wire W1) and the second module-side terminal T22 (electric wire W3) through the booster capacitor 56 and the resistor 57.

As mentioned above, according to the present example, the following effects are obtained in addition to the effects (1), (4) to (9) of the first example.
(1) In the present example, by adopting the inverter INV1 realized using the so-called half bridge circuit, it is possible to further simplify the circuit configuration, and it is possible to achieve low cost.
(2) In the present example, since it is not necessary to lay the electric wire W3 over the entire area between the module 10 and the driving ECU 60 like the second electric wire W2, the electric wire W3 can be shortened, and thus, it is possible to further reduce the size and weight of the entire device.

### Third Example

Hereinafter, a third example of the vehicle door handle driving device and the vehicle communication apparatus will be described. A third example is mainly different from the first example in that a dedicated switch for grounding the ground terminal 35 of the sensor IC 30 is provided separately from the switches (SW2 to SW5) for a period during which the LF antenna 21 is driven, and thus, the detailed description of the same components will be omitted.

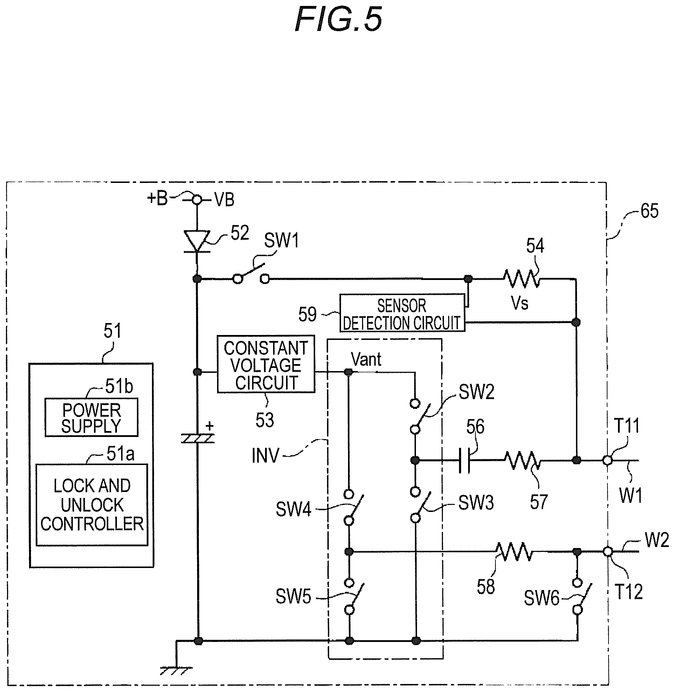

As shown in Fig. 5, in a driving ECU 65 of the present example, the backflow prevention diode 55 is omitted, and the other end of the sensor detection resistor 54 is connected to the first controller-side terminal T11 (first electric wire W1). The second controller-side terminal T12 is grounded through a sixth switch SW6 interposed between the resistor 58 and the second controller-side terminal.

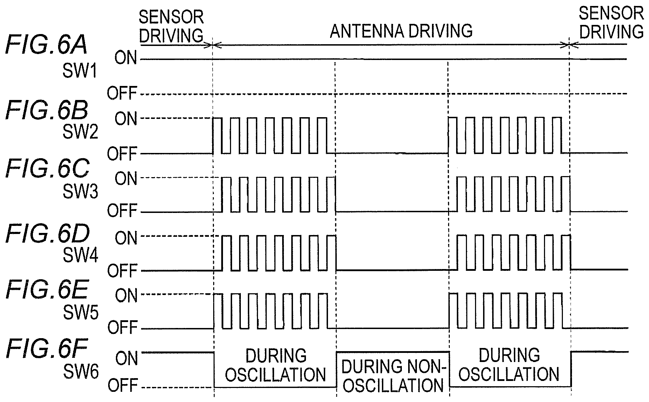

As shown in Fig. 6A, in the present example, the power supply 51b sets the first switch SW1 to be constantly in the ON state.

As shown in Figs. 6B to 6F, for a period during which the sensor IC 30 is driven (for a period during which the square wave voltage VP is not generated), the power supply 51b sets the second to fifth switches SW2 to SW5 to be in the OFF state, and sets the sixth switch SW6 to be in the ON state. Accordingly, the second controller-side terminal T12 (second electric wire W2) is grounded. Accordingly, the power terminal 34 is connected to the battery +B through the resistor 41 and the first module-side terminal T21 (first electric wire W1) and the ground terminal 35 is grounded through the second module-side terminal T22 (second electric wire W2), so that the battery voltage VB of the battery +B is supplied to the sensor IC 30 through the first and second electric wires W1 and W2.

Meanwhile, for a period during which the LF antenna 21 is driven and oscillates (for a period during which the square wave voltage VP is generated), the power supply 51b alternately switches the ON and OFF states of the second and fifth switches SW2 and SW5 and the ON and OFF states of the third and fourth switches SW3 and SW4 at the resonance frequency f1. Accordingly, the power supply 51b generates the square wave voltage VP having the resonance frequency f1 having the amplitude double that of the antenna driving voltage Vant. In this case, the power supply 51b sets the sixth switch SW6 to be in the OFF state. Accordingly, the LF antenna 21 is driven by the voltage obtained by raising the DC component of the square wave voltage VP by the battery +B. The sensor IC 30 is driven by the voltage obtained by raising the DC component of the square wave voltage VP by the battery +B and smoothing the voltage whose DC component is raised in the capacitor 42.

For a period during which the LF antenna 21 is driven but does not oscillate, the power supply 51b sets the second to fifth switches SW2 to SW5 to be in the OFF state, and sets the sixth switch SW6 to be in the ON state. Accordingly, the power terminal 34 is connected to the battery +B through the resistor 41 and the first module-side terminal T21 (first electric wire W1), and the ground terminal 35 is grounded through the second module-side terminal T22 (second electric wire W2) and the sixth switch SW6. Therefore, the battery voltage VB of the battery +B is supplied to the sensor IC 30 through the first and second electric wires W1 and W2.

Here, the sixth switch SW6 that grounds the ground terminal 35 of the sensor IC 30 and the second to fifth switches SW2 to SW5 for a period during which the LF antenna 21 are separated, and thus, it is possible to achieve the configuration of the driving ECU 65 by combinations of cheap general-purpose ICs.

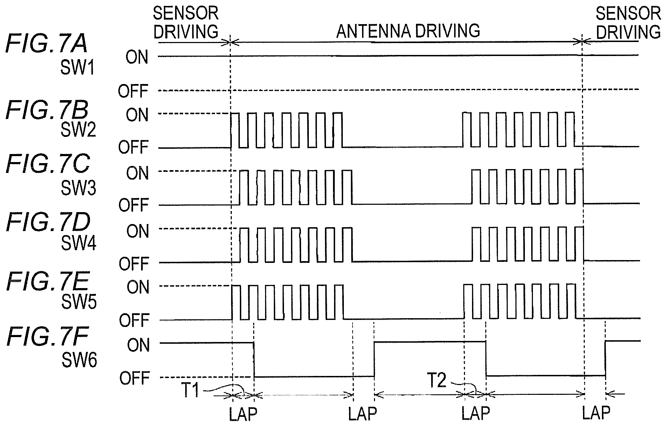

That is, as shown in Figs. 7A to 7F, for a period during which the LF antenna 21 is driven and oscillates, a period during which the sensor is driven and a period during which the antenna is driven may be lapped as long as the sixth switch SW6 becomes in the OFF state. That is, the sensor driving period and the antenna driving period may not be accurately distinguished.

For example, in a period T1, after the LF antenna 21 starts to be driven (after the LF antenna starts to oscillate) by the second to fifth switches SW2 to SW5, the sixth switch SW6 is maintained in the ON state, and the power is continuously supplied to the sensor IC 30. In a period T2, after the LF antenna 21 is switched from the non-oscillation state to the oscillation state (after the LF antenna starts to oscillate) by the second to fifth switches SW2 to SW5, the sixth switch SW6 is maintained in the ON state, and the power is continuously supplied to the sensor IC 30. However, for a period during which the LF antenna 21 oscillates, since there is a period during which the sixth switch SW6 is in the OFF state, the LF antenna 21 can oscillate.

As described above, since the sensor driving period and the antenna driving period may not be accurately distinguished, the driving ECU 65 obtained by combining the general-purpose ICs may be used, and it is possible to realize the driving ECU 65 at lower cost.

As stated above, according to the present example, the following effects are obtained in addition to the effects (1), (4) to (9) of the first example.
(1) In the present example, the sixth switch SW6 that grounds the ground terminal 35 of the sensor IC 30 and the second to fifth switches SW2 to SW5 for a period during which the LF antenna 21 is driven are separated, and thus, it is possible to achieve the driving ECU 65 by the combinations of the cheap general-purpose ICs.

The above-described examples may be changed as follows.
- In the first example, for a period during which the LF antenna 21 does not oscillate, the fifth switch SW5 may be in the OFF state.
- In the third example, for a period during which the LF antenna 21 does not oscillate, the sixth switch SW6 may be in the OFF state.
- In the first example, the backflow prevention diode 55 may be omitted.
- In the second and third examples, the backflow prevention diode 55 may be added as in the first example.
- In the respective examples, the resistor 43 may be replaced with a capacitor or an inductance as long as an element (passive element) that causes impedance is used.
- In the respective examples, the constant voltage circuit 53 may be omitted, and the square wave voltage may be generated from the battery voltage VB of the battery +B.
- In the respective examples, an inverter that generates, for example, a sinusoid AC voltage may be adopted.
- In the respective examples, the first switch SW1 which is basically and constantly in the ON state may be omitted, and the cathode of the diode 52 and the sensor detection resistor 54 may be directly connected.
- In the respective examples, in the configuration in which a plurality of vehicle doors is provided, for example, the first switch SW1 may be in the OFF state such that the power is blocked from being supplied to a part of the outside door handles 2 (sensor ICs 30) mounted on the plurality of vehicle doors depending on the remaining power of the battery +B. For example, in a case where the vehicle is left in a parking state for a long period, that is, for a period during which there is a few remaining power of the battery +B, the first switch SW1 may be in the OFF state such that the power is blocked from being supplied to the outside door handles 2 (sensor ICs 30) mounted on all the vehicle doors except for a vehicle door on a driver's seat. That is, "the first connection wire being constantly connected to the first positive DC power supply" means the connection in a normal vehicle use state, and does not exclude the disconnection in an abnormal vehicle use state.
- In the respective examples, the frequency (that is, resonance frequency f1) and the duty ratio of the square wave voltage for a period during which the LF antenna 21 oscillates may be arbitrary.
- In the respective examples, the lock detection signal or the unlock detection signal (detection signal) may be continuously output for a predetermined period (for example, a period during which approach or touch of the person is detected).
- In the respective examples, the lock detection signal and the unlock detection signal may be identified due to different voltage levels from each other.
- In the respective examples, the lock detection signal or the unlock detection signal (detection signal) may adopt an arbitrary output system such as code, voltage, or current.
- In the respective examples, for example, the antenna driving detection unit 30b of the sensor IC 30 may detect the driving of the LF antenna 21 by detecting the voltage fluctuation of the power terminal 34.
- In the respective examples, for example, the antenna driving detection unit 30b of the sensor IC 30 may detect the driving of the LF antenna 21 by monitoring the voltage fluctuation of the power terminal 34. Alternatively, the driving of the LF antenna 21 may be detected by providing a transformer coupling coil near the antenna coil 12 and monitoring the AC voltage induced in these coils by the antenna driving detection unit 30b of the sensor IC 30.
- In the respective examples, for a period during which the power supply 51b of the driving ECU 50 (controller 51) drives the LF antenna 21, the lock and unlock controller 51a may not input the lock detection signal or the unlock detection signal.
- In the respective examples, the arrangement of the lock detection area 3 and the unlock detection area 4 in the outside door handle 2 and the arrangement and shape of the lock sensor electrode 5 and the unlock sensor electrode 6 corresponding thereto may be appropriately changed.
- In the respective examples, any one function of the function of detecting that the hand of the person approaches or touches the lock detection area 3 by the lock and unlock detection unit 30a and the function of detecting that the hand of the person approaches or touches the unlock detection area 4 may be omitted.
- In the respective examples, as various switches (SW1 to SW6, SW12 and SW13), a bipolar transistor, MOSFET, and a mechanical switch may be adopted.
- In the respective examples, the sensor IC 30 may detect approach or touch of the person using one or combinations of contact sensors or proximity sensors such as an electrostatic sensor, a shock sensor, a pyroelectric sensor, a pressure sensor, an infrared sensor, and RFID.
- In the respective examples, the sensor IC 30 may be manufactured using a microcomputer and an analog element such as a regulator or a transistor.
- In the respective examples, the radio signal output from the LF antenna 21 may be modulated by, for example, an FM modulation scheme in addition to an AM modulation scheme.
- In the respective examples, the module 10 may be provided within a vehicle door, a doorknob, a pillar, a side mirror, or a vehicle compartment.
- The examples disclosed herein may be applied to a so-called tire-pressure monitoring system (TPMS) that detects an air pressure or temperature of a tire through wireless communication with a sensor provided within a tire or a wheel of the vehicle.

## Claims

1. A vehicle communication apparatus (100) comprising a first connection wire (W1), a second connection wire (W2), an antenna (21), a DC driving detection member (30), a DC cut capacitor (44), a passive element (43) and a vehicle door handle driving device (50, 60, 65), wherein the vehicle door handle driving device (50, 60, 65) is electrically connected to the antenna (21) and the DC driving detection member (30) for detecting approach or touch of a person, the antenna (21) and the DC driving detection member (30) being mounted on a door handle (2) and being connected in parallel, through the first connection wire (W1) and the second connection wire (W2), wherein the DC driving detection member (30) includes a power terminal (34) and a ground terminal (35) which are respectively connected to the first connection wire (W1) and the second connection wire (W2), a detection output terminal (33) which is connected to the first connection wire (W1) to output a negative detection signal indicating whether or not approach or touch of a person is detected, an antenna driving detection terminal (36) which is connected to the first connection wire (W1), and an antenna driving detection unit (30b) which detects a driving state of the antenna (21) based on a voltage input to the antenna driving detection terminal (36);
wherein the vehicle door handle driving device (50, 60, 65) is electrically connected to the DC cut capacitor (44) whose both terminals are respectively connected to the detection output terminal (33) and the antenna driving detection terminal (36);
wherein the passive element (43) has two terminals that are respectively connected to the antenna driving detection terminal (36) and the ground terminal (35);
wherein the first connection wire (W1) is constantly connected to a first positive DC power supply (+B), and the second connection wire (W2) is connected to a ground for a period during which the antenna (21) is not driven, and
wherein the vehicle door handle driving device (50, 60, 65) further comprises:
a booster capacitor (56) whose first terminal is connected to the first DC power supply (+B);
an inverter (INV) that is connected to the second terminal of the booster capacitor (56), is connected to a second positive DC power supply (53) and the ground, the inverter (INV) being configured to generate an AC voltage having a resonance frequency of the antenna (21) and output the generated AC voltage to the first connection wire (W1) and the second connection wire (W2) through the booster capacitor (56), and
a lock and unlock controller (51a) configured to issue a lock or unlock command of a vehicle door based on the detection signal.

2. The vehicle communication apparatus (100) according to claim 1,
wherein the first terminal of the booster capacitor (56) is connected to the first DC power supply (+B) through a cathode of a diode (52) whose anode is connected to the first DC power supply (+B).

3. The vehicle communication apparatus (100) according to claim 1 or 2,
wherein a period during which the antenna (21) is driven is divided into an oscillation period during which the AC voltage is generated and a non-oscillation period during which the AC voltage is not generated, and
the second connection wire (W2) is connected to the ground during the non-oscillation period of the antenna (21).

## Patentansprüche

1. Fahrzeugkommunikationsvorrichtung (100), umfassend einen ersten Verbindungsdraht (W1), einen zweiten Verbindungsdraht (W2), eine Antenne (21), ein Gleichstrom-Ansteuerdetektionselement (30), einen Gleichstromsperrkondensator (44), ein passives Element (43) und eine Fahrzeugtürgriffansteuervorrichtung (50, 60, 65),
wobei die Fahrzeugtürgriffansteuervorrichtung (50, 60, 65) mit der Antenne (21) und dem Gleichstrom-Ansteuerdetektionselement (30) zum Detektieren einer Annäherung einer oder einer Berührung durch eine Person elektrisch verbunden ist, wobei die Antenne (21) und das Gleichstrom-Ansteuerdetektionselement (30) an einem Türgriff (2) angebracht und durch den ersten Verbindungsdraht (W1) und den zweiten Verbindungsdraht (W2) parallel geschaltet sind,
wobei das Gleichstrom-Ansteuerdetektionselement (30) einen Stromanschluss (34) und einen Masseanschluss (35), die mit dem ersten Verbindungsdraht (W1) bzw. dem zweiten Verbindungsdraht (W2) verbunden sind, einen Detektionsausgangsanschluss (33), der mit dem ersten Verbindungsdraht (W1) verbunden ist, um ein negatives Detektionssignal auszugeben, welches angibt, ob eine Annäherung einer oder eine Berührung durch eine Person detektiert wird oder nicht, einen Antennenansteuerdetektionsanschluss (36), der mit dem ersten Verbindungsdraht (W1) verbunden ist, und eine Antennenansteuerdetektionseinheit (30b), die einen Ansteuerzustand der Antenne (21) basierend auf einer zu dem Antennenansteuerdetektionsanschluss (36) eingegebenen Spannung detektiert, umfasst,
wobei die Fahrzeugtürgriffansteuervorrichtung (50, 60, 65) mit dem Gleichstromsperrkondensator (44) elektrisch verbunden ist, dessen beide Anschlüsse mit dem Detektionsausgangsanschluss (33) bzw. dem Antennenansteuerdetektionsanschluss (36) verbunden sind,
wobei das passive Element (43) zwei Anschlüsse aufweist, die mit dem Antennenansteuerdetektionsanschluss (36) bzw. dem Masseanschluss (35) verbunden sind,
wobei der erste Verbindungsdraht (W1) ständig mit einer ersten positiven Gleichstromversorgung (+B) verbunden ist und der zweite Verbindungsdraht (W2) während eines Zeitraums, während dessen die Antenne (21) nicht angesteuert wird, mit einer Masse verbunden ist und
wobei die Fahrzeugtürgriffansteuervorrichtung (50, 60, 65) ferner umfasst:
einen Boosterkondensator (56), dessen erster Anschluss mit der ersten Gleichstromversorgung (+B) verbunden ist,
einen Inverter (INV), der mit dem zweiten Anschluss des Boosterkondensators (56) verbunden ist, mit einer zweiten positiven Gleichstromversorgung (53) und mit der Masse verbunden ist, wobei der Inverter (INV) dazu ausgebildet ist, eine Wechselspannung mit einer Resonanzfrequenz der Antenne (21) zu erzeugen und die erzeugte Wechselspannung durch den Boosterkondensator (56) zu dem ersten Verbindungsdraht (W1) und dem zweiten Verbindungsdraht (W2) auszugeben, und
eine Verriegelungs- und Entriegelungssteuerung (51a), die dazu ausgebildet ist, basierend auf dem Detektionssignal einen Verriegelungs- oder Entriegelungsbefehl einer Fahrzeugtür auszugeben.

2. Fahrzeugkommunikationsvorrichtung (100) nach Anspruch 1, wobei der erste Anschluss des Boosterkondensators (56) durch eine Kathode einer Diode (52), deren Anode mit der ersten Gleichstromversorgung (+B) verbunden ist, mit der ersten Gleichstromversorgung (+B) verbunden ist.

3. Fahrzeugkommunikationsvorrichtung (100) nach Anspruch 1 oder 2,
wobei ein Zeitraum, während dessen die Antenne (21) angesteuert wird, in einen Schwingungszeitraum, während dessen die Wechselspannung erzeugt wird, und einen Nichtschwingungszeitraum, während dessen die Wechselspannung nicht erzeugt wird, unterteilt ist und
der zweite Verbindungsdraht (W2) während des Nichtschwingungszeitraums der Antenne (21) mit der Masse verbunden ist.

## Revendications

1. Appareil de communication de véhicule (100) comportant un premier fil de connexion (W1), un deuxième fil de connexion (W2), une antenne (21), un élément de détection de commande à courant continu (30), un condensateur de coupure à courant continu (44), un élément passif (43) et un dispositif de commande de poignée de porte de véhicule (50, 60, 65),
dans lequel le dispositif de commande de poignée de porte de véhicule (50, 60, 65) est électriquement connecté à l'antenne (21) et à l'élément de détection de commande à courant continu (30) pour détecter une approche ou un contact d'une personne, l'antenne (21) et l'élément de détection de commande à courant continu (30) étant montés sur une poignée de porte (2) et étant connectés en parallèle, par l'intermédiaire du premier fil de connexion (W1) et du deuxième fil de connexion (W2),
dans lequel l'élément de détection de commande à courant continu (30) comprend une borne d'alimentation (34) et une borne de masse (35) qui sont respectivement connectés au premier fil de connexion (W1) et au deuxième fil de connexion (W2), une borne de sortie de détection (33) qui est connectée au premier fil de connexion (W1) pour délivrer un signal de détection négatif indiquant si une approche ou un contact d'une personne est détecté ou non, une borne de détection de commande d'antenne (36) qui est connectée au premier fil de connexion (W1), et une unité de détection de commande d'antenne (30b) qui détecte un état de commande de l'antenne (21) sur la base d'une tension entrée dans la borne de détection de commande d'antenne (36) ;
dans lequel le dispositif de commande de poignée de porte de véhicule (50, 60, 65) est électriquement connecté au condensateur de coupure à courant continu (44) dont les deux bornes sont respectivement connectées à la borne de sortie de détection (33) et à la borne de détection de commande d'antenne (36) ;
dans lequel l'élément passif (43) a deux bornes qui sont respectivement connectés à la borne de détection de commande d'antenne (36) et à la borne de masse (35) ;
dans lequel le premier fil de connexion (W1) est constamment connecté à une première alimentation à courant continu positif (+B), et le deuxième fil de connexion (W2) est connecté à la masse pendant une période au cours de laquelle l'antenne (21) n'est pas commandée, et
dans lequel le dispositif de commande de poignée de porte de véhicule (50, 60, 65) comprend en outre :
un condensateur survolteur (56) dont une première borne est connectée à la première alimentation à courant continu (+B) ;
un onduleur (INV) qui est connecté à la deuxième borne du condensateur survolteur (56), est connecté à une deuxième alimentation à courant continu positif (53) et à la masse, l'onduleur (INV) étant configuré pour générer une tension à courant alternatif ayant une fréquence de résonance de l'antenne (21) et pour délivrer la tension à courant alternatif générée au premier fil de connexion (W1) et au deuxième fil de connexion (W2) par l'intermédiaire du condensateur survolteur (56), et
un dispositif de commande de blocage et de déblocage (51a) configuré pour délivrer une commande de blocage et de déblocage d'une porte de véhicule sur la base du signal de détection.

2. Appareil de communication de véhicule (100) selon la revendication 1,
dans lequel la première borne du condensateur survolteur (56) est connecté à la première alimentation à courant continu (+B) par l'intermédiaire d'une cathode d'une diode (52) dont une anode est connectée à la première alimentation à courant continu (+B).

3. Appareil de communication de véhicule (100) selon la revendication 1 ou 2,
dans lequel une période pendant laquelle l'antenne (21) est commandée est divisée en une période d'oscillation pendant laquelle la tension à courant alternatif est générée et une période sans oscillation pendant laquelle la tension à courant alternatif n'est pas générée, et
le deuxième fil de connexion (W2) est connecté à la masse pendant la période sans oscillation de l'antenne (21) .
